(19) Europäisches Patentamt
European Patent Office
Office européen des brevets

(11) **EP 4 566 999 A1**

(12) **EUROPEAN PATENT APPLICATION**

(43) Date of publication:
**11.06.2025 Bulletin 2025/24**

(21) Application number: **23214491.5**

(22) Date of filing: **06.12.2023**

(51) International Patent Classification (IPC):
**C01G 45/12** [(2025.01)]  **C01G 53/00** [(2025.01)]
**H01M 4/505** [(2010.01)]  **H01M 4/525** [(2010.01)]

(52) Cooperative Patent Classification (CPC):
**C01G 53/82; C01G 45/1228; C01G 53/50;**
**H01M 4/505; H01M 4/525; H01M 10/052;**
C01P 2002/52; C01P 2004/50; C01P 2004/51;
C01P 2004/61; C01P 2004/62; C01P 2006/11;
C01P 2006/12; C01P 2006/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Umicore Battery Materials Finland Oy
67900 Kokkola (FI)**

• **Umicore
1000 Brussels (BE)**

(72) Inventors:
• **ISOSAARI, Eveliina
Kokkola (FI)**
• **RÄSÄNEN, Samuli
Kokkola (FI)**

(74) Representative: **Umicore RDI Patent Department
Watertorenstraat 33
2250 Olen (BE)**

(54) **A MANGANESE CONTAINING PRECURSOR, CATHODE ACTIVE MATERIAL THEREOF AND LITHIUM-ION SECONDARY BATTERY**

(57) The present invention concerns material comprising hydroxide or oxyhydroxide of at least one or more metal elements, and a cathode active material for lithium-ion secondary batteries. The present invention relates to a manganese-containing precursor for cathode active material for secondary batteries, said precursor comprising M and element oxygen, wherein M compress Ni in a content x, wherein $0.0 \leq x \leq 50.0$ mol%, relative to M, Mn in a content y, wherein $50.0 \leq y \leq 90.0$ mol%, relative to M, Co in a content z, wherein $0.0 \leq z \leq 40.0$ mol%, relative to M, at least one element selected from the group consisting of Al, Ti, V, Mg, Cr, Ca, Zr, Nb, Mo, Hf, Ta, and W, in a content t, $0.0 \leq t \leq 10.0$ mol%, relative to M; wherein x, y, z, and t are measured by ICP-OES; and wherein x+y+z+t is 100.0 mol%; and wherein the manganese-containing precursor has a tap density, TD, of at least 1.65 g/cm$^3$ and a ratio of a specific surface area, SSA, to the tap density, SSA/TD, of at least 12.00, expressed in unit (m$^2$*cm$^3$)/g$^2$.

**Fig. 1**

EP 4 566 999 A1

**EP 4 566 999 A1**

**Description**

**TECHNICAL FIELD**

The present invention relates to metal hydroxides that can be used as precursors to cathode active materials for secondary batteries. Particularly, however not exclusively, the present invention concerns material comprising hydroxide or oxyhydroxide of at least one or more metal elements, and a cathode active material for lithium-ion secondary batteries.

**BACKGROUND**

Lithium-ion secondary batteries typically include a negative electrode (anode), an electrolyte, and a positive electrode (cathode) that contains a lithium-transition metal oxide as an active material capable of lithium insertion and desorption. Lithium-transition metal oxides are generally manufactured from transition-metal hydroxides, oxides or oxyhydroxide, generally referred as precursors. These precursors are typically produced through co-precipitation processes involving the mixing of a metal salt solution and an alkali solution in the presence of a complexing agent. Commonly used metals are transition metals such as nickel, manganese, and cobalt. A manufacturing process for cathode materials typically includes mixing a precursor material with a source of lithium, sintering, and, when necessary, also milling. Examples of such cathode materials include lithium nickel manganese cobalt oxides, abbreviated as NMC, Li-NMC, LNMC, or NCM.

As cathode materials play a critical role in rechargeable batteries and exert a significant impact on the overall battery performance, there has been extensive research and development in this field in recent years, encompassing their precursors. Several trends in the development of cathode materials include, among others, enhancing capacity retention, achieving higher energy densities, improving stability and cycling performance, and reducing costs. Modifying the transition metal stoichiometry changes the material's properties, providing a way to adjust cathode performance. However, in the case of a NMC-based battery, increasing the nickel content enhances its initial discharge capacity but diminishes its thermal stability and capacity retention. Elevating cobalt content involves replacing either higherenergy nickel or chemically stable manganese, in addition to being cost-prohibitive. Conversely, increasing manganese content results in reduced capacity performance for the manufactured battery due to its lower nickel content.

There is thus a need for achieving improved cathode materials by designing specific precursors to address the above-mentioned problems.

**ACKNOWLEDGMENT**

This invention was made with the support from Materials/Parts Technology Development Program through Korea evaluation institute of industrial technology funded by Ministry of Trade, Industry and Energy (MOTIE, Republic of Korea). [Project Name: Development of high power (high discharge rate) lithium-ion secondary batteries with 8Crate class / Project Number: 20011287 / Contribution rate: 100%]

**SUMMARY OF THE INVENTION**

The present invention aims at providing manganese-rich transition metal composite precursor materials having an advantageous microstructure for cathode active material particularly suitable to be applied in high power battery applications, including electric vehicles. By increasing the tap density and the specific surface area of the manganese-rich precursor the discharge capacity demands of the cathode active material made from said precursor can be met.

In a first aspect, the invention can provide a manganese-containing precursor for cathode active material for secondary batteries, said precursor comprising M and element oxygen, wherein M compress

- Ni in a content x, wherein $0.0 \leq x \leq 50.0$ mol%, relative to M,
- Mn in a content y, wherein $50.0 \leq y \leq 90.0$ mol%, relative to M,
- Co in a content z, wherein $0.0 \leq z \leq 40.0$ mol%, relative to M,
- at least one element selected from the group consisting of Al, Ti, V, Mg, Cr, Ca, Zr, Nb, Mo, Hf, Ta, and W, in a content t, $0.0 \leq t \leq 10.0$ mol%, relative to M;
- wherein x, y, z, and t are measured by ICP-OES; and
- wherein x+y+z+t is 100.0 mol%; and

said manganese-containing precursor having a tap density, abbreviated as TD, of at least 1.65 g/cm$^3$ and a ratio of a specific surface area, abbreviated as SSA, to the tap density, SSA/TD, of at least 12.00, expressed in unit (m$^2$* cm$^3$)/g$^2$. The tap density, typically expressed in unit g/cm$^3$, may be measured according to a well standardized methodology ISO 3953, or equivalently ASTM B 527. The specific surface area typically expressed in unit $m^2/g$, may be measured according to a well standardized methodology ISO 9277. The ratio of the specific surface area to the tap density can be expressed as SSA/TD in unit $(m^{2*} cm^3)/g^2$ or equivalently $(m^{2*} cc)/g^2$.

The combined characteristics according to the invention, i.e. the disclosed ranges of the transition metal stoichiometry, the tap density, and the ratio of the specific surface area to the tap density, surprisingly contributes to uncompromised battery electrochemical properties such as discharge capacity and efficiency value, even though having a relatively low amount of nickel.

Thus, in a second aspect, the invention can provide a cathode active material for a lithium-ion secondary battery. Said cathode active material comprises lithium-transition metal composite oxide particles formed by using the manganese-containing precursor according to the first aspect of the invention.

In addition, in a third aspect, the invention can provide a lithium-ion secondary battery comprising a cathode which comprises a cathode active material according to the second aspect of the invention.

The main embodiments are characterized in the independent claims. Various embodiments are disclosed in the dependent claims. The embodiments and examples recited in the claims and the specification are mutually freely combinable unless otherwise explicitly stated.

## BRIEF DESCRIPTION OF THE FIGURES

By means of further guidance, figures are included to better appreciate the teaching of the present invention, wherein:

Fig. 1A and 1B show the scanning electron microscope (SEM) images of surface and cross-section of particles obtained from Example 1, respectively;

Fig. 1C and 1D show the scanning electron microscope (SEM) images of surface and cross-section of particles obtained from Example 2, respectively;

Fig. 1E and 1F show the scanning electron microscope (SEM) images of surface and cross-section of particles obtained from Example 3, respectively;

Fig. 1G and 1H show the scanning electron microscope (SEM) images of surface and cross-section of particles obtained from Example 4, respectively.

Fig. 2A and 2B show the scanning electron microscope (SEM) images of surface and cross-section of particles obtained from Comparative Example 1, respectively;

Fig. 2C and 2D show the scanning electron microscope (SEM) images of surface and cross-section of particles obtained from Comparative Example 2, respectively;

Fig. 2E and 2F show the scanning electron microscope (SEM) images of surface and cross-section of particles obtained from Comparative Example 3, respectively;

Fig. 2G and 2H show the scanning electron microscope (SEM) images of surface and cross-section of particles obtained from Comparative Example 4, respectively.

## DETAILED DESCRIPTION OF THE INVENTION

In the following detailed description, preferred embodiments are described in detail to enable practice of the invention. Although the invention is described with reference to these specific preferred embodiments, it will be understood that the invention is not limited to these preferred embodiments. To the contrary, the invention includes numerous alternatives, modifications and equivalents as will become apparent from consideration of the following detailed description and accompanying drawings. In this specification, if any numerical ranges are provided, the ranges include also the upper and lower values unless otherwise explicitly stated.

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

In a first aspect, the invention can provide a manganese-containing precursor for cathode active material for secondary batteries, said precursor comprising M and element oxygen, wherein M compress

- Ni in a content x, wherein $0.0 \leq x \leq 50.0$ mol%, relative to M,
- Mn in a content y, wherein $50.0 \leq y \leq 90.0$ mol%, relative to M,

- Co in a content z, wherein $0.0 \leq z \leq 40.0$ mol%, relative to M,
- at least one element selected from the group consisting of Al, Ti, V, Mg, Cr, Ca, Zr, Nb, Mo, Hf, Ta, and W, in a content t, $0.0 \leq t \leq 10.0$ mol%, relative to M;
- wherein x, y, z, and t are measured by ICP-OES; and
- wherein x+y+z+t is 100.0 mol%; and

said manganese-containing precursor having a tap density, abbreviated as TD, of at least 1.65 g/cm$^3$, and a ratio of a specific surface area , abbreviated as SSA, to the tap density, SSA/TD, of at least 12.00, expressed in unit (m$^2$* cm$^3$)/g$^2$.

The precursor according to the first aspect may be presented by a general formula M-O$_a$(OH)$_{2-a}$, wherein $0 \leq a \leq 2$. As can be readily understood by the skilled person in the art, the expression of M-O$_a$(OH)$_{2-a}$, wherein $0 \leq a \leq 2$, refers to metal hydroxide, oxyhydroxide, oxide or any combination thereof. M may be presented by a general formula Ni$_{x'}$Mn$_{y'}$Co$_{z'}$A$_{t'}$, wherein x'+y'+z'+t'=1, $0 \leq x' \leq 0.5$, $0.5 \leq y' \leq 0.9$, $0 \leq z' \leq 0.4$, $0 \leq t' \leq 0.1$, and A is at least one additional element selected from Al, Ti, V, Mg, Cr, Ca, Zr, Nb, Mo, Hf, Ta, and W.

The values x, y, z, t, etc. can be measured by Inductively Coupled Plasma Optical Emission spectroscopy (ICP-OES) method. It can be understood that the expression $\geq 0$ in the chemical formulas includes the absence of an element.

The tap density, typically expressed in unit g/cm$^3$, may be measured according to a well standardized methodology ISO 3953, or equivalently ASTM B 527. As appreciated by the skilled person, the tap density can be carried out on, for example, an J.Engelsmann Stamping volumeter STAV II instrument.

The specific surface area, typically expressed in unit m$^2$/g, may be measured according to a well standardized methodology ISO 9277. The ratio of the specific surface area to the tap density can be expressed as SSA/TD in unit (m$^{2*}$ cm$^3$)/g$^2$ or equivalently (m$^{2*}$ cc)/g$^2$. As appreciated by the skilled person, the specific surface area can be measured, for example, with the Brunauer-Emmett-Teller (BET) method by using, for example, a Quantachrome Monosorb.

The combined characteristics according to the invention, i.e. the disclosed ranges of the transition metal stoichiometry, the tap density, and the ratio of the specific surface area to the tap density, surprisingly contributes to uncompromised battery electrochemical properties such as discharge capacity and efficiency value, even though having a relatively low amount of nickel, as it had been believed in the state of the art that reducing nickel content in the cathode active material adversely impacts the discharge capacity of batteries made therefrom.

The manganese-containing precursor according to the first aspect of the invention has the Ni content x of at most 50 mol%, preferably at most 45 mol%, and preferably at least 10 mol%, more preferably at least 15 mol%, and most preferably at least 25 mol%. In the disclosed chemical formula, Ni$_{x'}$Mn$_{y'}$Co$_{z'}$A$_{t'}$, the manganese-containing precursor has such a nickel content that x' being at most 0.5, preferably at most 0.4. Preferably, x' is at least 0.1, more preferably 0.25. The disclosed lower limits are beneficial for a satisfactory capacity.

The manganese-containing precursor according to the first aspect of the invention has the manganese content y of at least 50 mol%, preferably at least 55 mol%, and more preferably at least 60 mol%. In some embodiments, content y is at most 80 mol% or at most 70 mol%. In the disclosed chemical formula, Ni$_{x'}$Mn$_{y'}$Co$_{z'}$A$_{t'}$, the manganese-containing precursor has such a manganese content that y' is at least 0.5, preferably at least 0.55, and more preferably at least 0.6. In some embodiments, the manganese-containing precursor has such a manganese content that the y' value in the formula Ni$_x$Mn$_y$Co$_z$A$_t$ is at most 0.80 or at most 0.70.

The manganese-containing precursor according to the first aspect of the invention has the cobalt content z of at most 40 mol%, preferably at most 20 mol%. In the disclosed chemical formula, Ni$_{x'}$Mn$_{y'}$Co$_{z'}$A$_{t'}$, the manganese-containing precursor has such a cobalt content that z' is at most 0.4, preferably at most 0.2.

Sodium and sulfur are considered as impurities and commonly present in the precursor manufactured in the co-precipitation process using metal sulfate solution and NaOH solution. Most of the sodium and sulfur remains during the firing of the precursor and hence the final cathode active material contains sodium and sulfur. A high level of impurities may affect performance of the cathode active material. It is preferable that the manganese-containing precursor has a sodium content of at most 100 ppm. It is preferable the manganese-containing precursor has a sulfur content of at most 5000 ppm. However, it is also preferable that the sulfur content is at least 300 ppm, for example at least 450 ppm, or at least 1400 ppm.

It is desirable that the precursor has a high tap density. According to the invention, the manganese-containing precursor has a tap density, abbreviated as TD, of at least 1.65 g/cm$^3$, preferably at least 1.70 g/cm$^3$. As the microstructure and properties of precursors generally pass on the cathode active materials, the cathode active material made from the precursor according to the invention with a high tap density can pack more closely together in a given volume, leading to higher energy density in the electrode. In addition, cathode active materials with high tap density have fewer void spaces or pores within the electrode structure, and this can minimize the diffusion pathways for ions, allowing for faster ion transport and reducing the chances of side reactions or performance degradation. On the other hand, an excessively high tap density might lead to limited electrolyte penetration into the electrode material, and this could result in poor ion transport and low utilization of the active material, reducing the battery's overall performance. In some embodiments, the tap density is at most 2.00 g/cm$^3$, preferably the tap density at most 1.90 g/cm$^3$, most preferably at most 1.80 g/cm$^3$.

It is desirable that the precursor has a high specific surface area. According to the invention, the manganese-containing precursor has a such high specific surface area, abbreviated as SSA, that the ratio of the specific surface area to the tap density, expressed as SSA/TD, is at least 12.00 $(m^{2*} cm^3)/g^2$. The precursor according to the invention with high specific surface area, provided that the ratio SSA/TD is in the disclosed ranges according to the invention, provides more sites for reactants to come into contact with the material and more sites for adsorption of molecules or ions, leading to enhanced reactivity and adsorption capacity. The cathode active material made from the precursor with high specific surface area according to the invention may enhance ion diffusion, and this allows for faster charging and discharging, leading to higher power density and improved performance. In some embodiments, the manganese-containing precursor has the ratio SSA/TD of at least 14.00 $(m^{2*}cm^3)/g^2$. In some embodiments, the specific surface area is at least 25.00 $m^2/g$, preferably at least 30.00 $m^2/g$, more preferably at least 33.00 $m^2/g$. On the other hand, an excessively high surface area might affect the material stability or lead to challenges in handling and processing the material. In some embodiments, the ratio SSA/TD is at most 30.00, preferably at most 25.00 $(m^{2*} cm^3)/g^2$.

Materials with high specific surface areas often have a more porous structure. These pores can serve as reservoirs for reactants, enhance mass transport, and improve the overall efficiency of chemical reactions and energy storage processes. In some embodiments, the manganese-containing precursor has a total pore volume, abbreviated as TPV, of at least 0.100 $cm^3/g$, determined from nitrogen adsorption measurement and calculated according to the BJH method. BJH (after Barrett, Joyner, and Halenda) method is well known in the art, a procedure for calculating total pore volumes. The total pore volume may be measured according to a well standardized methodology ISO 15901 which describes a method for the evaluation of porosity and pore size distribution by gas adsorption. In view of the material stability and processability, it is preferable that TPV is at most 0.200 $cm^3/g$, more preferably at most at most 0.180 $cm^3/g$, determined by BJH method.

In some embodiments, the precursor according to the invention has a median particle size, D50, of at least 5.00 $\mu$m, as determined by laser diffraction; preferably the D50 is at most 12.00 $\mu$m, more preferably at most 10.00 $\mu$m. As appreciated by the skilled person, the particle size distribution can be analyzed by using a Malvern Mastersizer 3000 with a Hydro MV wet dispersion unit after dispersing particles of a sample in an aqueous medium. The disclosed ranges of median particle size in combination with the disclosed ranges of SSA/TD make the precursor contribute to improvement of the capacity.

The precursor according to the invention may have a core-shell structure, such that the precursor comprises particles having a core portion and a shell portion surrounding the core portion. The chemical compositions of the core portion and the shell portion may be the same or different. In some embodiments, the core portion comprises at least 90 mol-% of nickel or manganese based on the total mol% of the core portion.

The precursor according to the invention may be secondary particles composed of aggregated primary particles. In some embodiments, said primary particles have a particle-based thickness distribution as determined by measuring primary particle thickness in an image taken by SEM, wherein said thickness distribution has a corresponding thickness when a cumulative percentage reaches 75% being between 10 nm and 70 nm, preferably being between 20 nm and 50 nm; and/or said thickness distribution has a corresponding thickness when a cumulative percentage reaches 50% being between 10 nm and 70 nm, preferably being between 20 nm and 40 nm. The disclosed ranges of the thickness not only contribute to the specific surface area and/or porosity, but also contribute to even and uniform lithium distribution within cathode materials thanks to the homogeneity of the precursor.

A manufacturing method for the precursor of the invention may, for example, generally include:

- providing a starting solution comprising an aqueous slurry of seed particles in a reactor vessel,
- supplying a flow of a metal salt solution comprising the one or more metal elements to the reactor vessel for a time period T1-T2,
- during the time period T1-T2, admixing starting solution, the metal salt solution and an aqueous solution comprising one or more alkali hydroxides, thereby precipitating the hydroxide of the one or more metal elements and forming an aqueous slurry comprising the hydroxide of the one or more metal elements; optionally, a complexing agent such as ammonia aqueous solution may be present in the staring solution and/or precipitating process, such that a concentration of $NH_3$ of at most 10.0 g/l in the precipitating process is maintained, preferably at most 5.0 g/l, more preferably at most 1.0, even more preferably at most 0.5 g/l, and most preferably nearly 0 g/l.

wherein during the time period T1 - T2:

- adjusting pH value of the reaction mixture in the reaction vessel so that the pH value of the reaction mixture in the reaction vessel is maintained below 12, preferably at 11.7 at most, more preferable between 10.5 - 11.0, for example 10.7 - 10.8, 10.8-10.9, or 10.7 - 10.9, wherein the pH value is the pH value as measured on a sample of the aqueous slurry at 20°C; and
- maintaining in the reaction vessel an $O_2$ content in the reaction vessel atmosphere was maintained at more than 0 vol. %, for example more than 0.5 vol. %, or more than 0 vol. % and up to 6 vol. %,

wherein after the end of the time period T2 the aqueous slurry in the reactor vessel is further processed by separating a solid fraction from a liquid fraction and drying the solid fraction to obtain a powderous precursor.

During the course of manufacturing process, the precipitated hydroxide may be partially oxidized, depending on the metal content of the metal salt solution and/or on the oxidizing atmosphere during the manufacturing process. Thus, the aqueous slurry may contain oxyhydroxide. Also during drying, the hydroxide or oxyhydroxide particles from the aqueous slurry may be further partially oxidized.

As appreciated by the skilled person the pH value can be measured by using a pH meter, for example 780 Metrohm meter. As appreciated by the skilled person the $NH_{3(aq)}$ concentration can be measured by using a commercially available titrator, for example Metrhom 848 Titrino Plus.

A method of manufacturing a cathode active material, may comprise, for example, the steps of:

- mixing a powderous material of the precursor according to the first aspect of the invention, a lithium source, and a optionally dopant source to obtain a mixture,
- heating the mixture in oxidizing atmosphere at a temperature between 650°C to 1000°C, preferably between 700°C to 925°C, to obtain the cathode active material, and optionally
- the method further comprising a heat treatment step before the mixing, wherein the powderous material is heated at a temperature of 105 °C to 750 °C.

**EXAMPLES**

The present invention is further illustrated with reference to some examples and comparative examples.

Measurement methods used in the examples

**A) Surface area analysis**

The specific surface area (SSA) of the samples, cathode active material precursors and cathode active material final products, was measured by a standard Brunauer-Emmett-Teller (BET) method according to ISO 9277 and carried out on a Quantachrome® Autosorb instrument. A powder sample was put int the sample tube and heated at 90 °C under a nitrogen ($N_2$) gas for 2 hours prior to the measurement in order to remove adsorbed species. Before the BET measurement, the sample was degassed at 200 °C for 6 hrs., to get rid of the moisture completely. The instrument performed the nitrogen adsorption test at 77 K. By obtaining the nitrogen isothermal absorption/desorption curve, the total specific surface area of the sample in $m^2$/g was derived.

**B) Tap density analysis**

The tap density (TD) measurement was carried out on J.Engelsmann Stamping volumeter STAV II instrument by mechanically tapping a graduated measuring cylinder (100 ml) containing the sample (having a mass W, around 60-120 g). After observing the initial powder volume, the measuring cylinder was mechanically tapped for 5000 times according to the tap density measurement procedure of ASTM B-527, so that no further change in volume (V in $cm^3$) or mass (W) was observed. The TD was calculated as TD=W/V.

**C) Secondary particle size distribution (PSD) analysis**

The secondary particle size distribution (PSD) was measured with a Malvern® MasterSizer3000 with a Hydro MV wet dispersion unit after dispersing particles of a sample in an aqueous medium. To improve the dispersion of the metal hydroxide powder, sufficient ultrasonic irradiation and stirring was applied, and an appropriate surfactant was introduced. Percentile values D10, D50, and D90 are the value of the secondary particle diameter at 10%, 50% and 90%, respectively, in the cumulative distribution. A span value of the hydroxide is a value of (D90-D10)/D50.

**D) Metal content analysis**

The amount of Ni, Co, Mn, Na and S in the cathode active material precursor powder was measured with the inductively coupled plasma - optical emission spectrometry (ICP-OES) method by using an iICAP 6000 (Agilent Technologies). 1 grams of powder sample was dissolved into 3 mL of high purity HCl and 3 mL of HNO3 and in an Erlenmeyer flask. The flask is covered by a glass and heated on a hot plate at 380 °C until complete dissolution of the precursor. After being cooled to room temperature, the solution of the Erlenmeyer flask is poured into a 250 mL volumetric flask. Afterwards, the volumetric flask is filled with deionized water up to the 250 mL mark, followed by complete homogenization.

### E) Primary particle size analysis

To obtain the thickness-based thickness distribution of the primary particle, the data can be processed in Microsoft Excel or any number processing software according to the below steps which is illustrated in Table 1:

a. Sort the primary particle thickness from lowest to highest in the "Thickness" column
b. Calculate the fraction of each thickness contribution to the total sum of thickness in the "Fraction of total" column
c. Calculate the cumulative fraction in the "cumulative" column
d. Calculate p50 and p75 each by linear line equation $y = mx + c$ from the two closest cumulative number; wherein p50 refers to the corresponding thickness when a cumulative percentage reaches 50%, and p75 refers to the corresponding thickness when a cumulative percentage reaches 75%.

Table 1. Example of p50 and p75 measurement for EX1

| Particle number | Thickness (nm) | Fraction of total (%) | Cumulative (%) | |
|---|---|---|---|---|
| 1 | 10.4 | $= \frac{10.4}{1101.6} \times 100\% = 0.9\%$ | =0.9 | |
| 2 | 11.6 | 1.1 | =0.9+1.1 = 2.0 | |
| 3 | 13.3 | 1.2 | =2.0+1.2 = 3.2 | |
| ⋮ | ⋮ | ⋮ | ⋮ | |
| 30 | 22.1 | 2.0 | 45.9% | |
| 31 | 22.5 | 2.0 | 48.0% | p50 = 23.3nm |
| 32 | 23.3 | 2.1 | 50.1% | |
| ⋮ | ⋮ | ⋮ | ⋮ | |
| 41 | 28.3 | 2.6 | 71.2% | |
| 42 | 29.2 | 2.6 | 73.9% | P75 = 29.3nm |
| 43 | 29.5 | 2.7 | 76.6% | |
| ⋮ | ⋮ | ⋮ | ⋮ | |
| 50 | 52.4 | 4.8 | 100.0% | |
| | | | | |
| Total | 1101.6 | 100.0 | | |

### F) Total pore volume analysis

Total pore volume of samples was measured by a standard Pore size distribution and porosity method according to ISO 15901 and carried out on a Quantachrome® Autosorb Nova 4200e analyzer.

### G) Content analysis

The amount of Na and S in the cathode active material precursor powder is measured with the inductively coupled plasma - optical emission spectrometry (ICP-OES) method by using an iICAP 6000 (Agilent Technologies). 1 grams of powder sample is dissolved into 10 mL of high purity hydrochloric acid (at least 37 wt% of HCl with respect to the total weight of solution) in an Erlenmeyer flask. The flask is covered by a glass and heated on a hot plate at 380 °C until complete dissolution of the precursor. After being cooled to room temperature, the solution of the Erlenmeyer flask is poured into a 250 mL volumetric flask. Afterwards, the volumetric flask is filled with deionized water up to the 250 mL mark, followed by complete homogenization. The contents of metals, such as Ni and Mn, are reported in mol% respect to the total molar contents of metals in the sample. The Na and S contents are reported in ppm.

**Example 1**

(1) Cathode active material precursor preparation step

(1a) Seed slurry preparation process

First, a starting solution was prepared by placing 10 L of DI water, 0.1 L of 55 g/L aqueous solution of ammonia and 0.1 L of 220 g/L NaOH solution in a 30 L reaction vessel equipped with a turbine-type impeller located 50 mm from the bottom of the vessel. The reactor temperature was adjusted to 45 °C and kept at this temperature throughout the process. An inert atmosphere was inside the reaction vessel was ensured by feeding $N_2$ gas with the flow rate of 0.3 $m^3$/h.

Next, 130 g/L metal sulfate solution comprising Ni, and Mn (in a stoichiometric molar ratio, Ni : Mn of 35 : 65), 55 g/L aqueous solution of ammonia and 220 g/L NaOH solution were continuously added with feed rates of 1.7 L/h, of 0.046 L/h, and of 1.44 L/h, respectively. The reaction mixture was stirred with the stirring speed of 1200 rpm. A $NH_3$(aq) concentration in the reaction mixture was kept between 1.2-1.5 g/L and pH of the reaction mixture was kept between 12.1-12.25 by adjusting the feeding of the aqueous solution of ammonia and the feeding of NaOH solution, respectively. The reaction was done in a continuous mode. When the reaction reached a stable state, a reaction resultant, i.e. the aqueous slurry of particles $Ni_{0.35}Mn_{0.65}(OH)_2$ having D50 of 1.3 $\mu$m, was collected from the overflow of the reaction vessel.

(1b) Particle growth process

First, a starting solution was prepared by placing 3.6 L of DI water in a 8.75 L reaction vessel equipped with two A45-type impellers, of which lower one was located 65 mm from the bottom of the vessel and the upper one located 140 mm up from the lower impeller. After starting feeding the gases of $N_2$ and $O_2$ inside the reaction vessel in such a way that the $O_2$ content in the reaction vessel atmosphere was maintained at 0.75 vol. % an amount of 400 ml of the prepared seed slurry of particles $Ni_{0.35}Mn_{0.65}(OH)_2$ having D50 of 1.3 $\mu$m (a seed amount was 48 g) was mixed with DI water. The pH of the starting solution was adjusted with 220 g/L NaOH(aq) to the value of 9.6 (measured at a temperature of 20 °C) and the reaction vessel was heated to 45 °C,

Next, a crystallization of the particles of the starting solution was continued by a precipitation reaction performed by adding 120 g/L metal sulfate solution comprising Ni, and Mn (in a stoichiometric molar ratio, Ni : Mn of 35 : 65) at a constant rate of 960 mL/h and 220 g/L NaOH(aq) solution in such a way that the pH value of the reaction mixture in the reaction vessel was raised from the pH value of the starting solution and kept between the maximum of 10.8 and the minimum of 10.7 (measured at a temperature of 20 °C). The reaction mixture was stirred with the stirring speed of 1200 rpm for the first 2 hours, followed with 800 rpm for the next 2 hours, with 600 rpm for the next 14 hours and then with 500 rpm, respectively, for the rest of the precipitation process. During the growth process a part of a liquid fraction (i.e. mother liquid) of the reaction mixture was pumped out from the reaction vessel by using a concentrator (i.e. a mother liquid filtration device) to maintain and increase solid phase content in the reaction vessel. The reaction was terminated after 50 hours from the start.

The obtained slurry was filtered and washed with 220 g/L NaOH(aq) solution and 60 °C DI water, followed by a heat treatment in an air atmosphere with 120 °C for 12 hours drying to obtain a oxyhydroxide powder presented by a general formula: $Ni_{0.35}Mn_{0.65}$-$O_a(OH)2_{-a}$, wherein $0 \leq a \leq 2$, a cathode active material precursor.

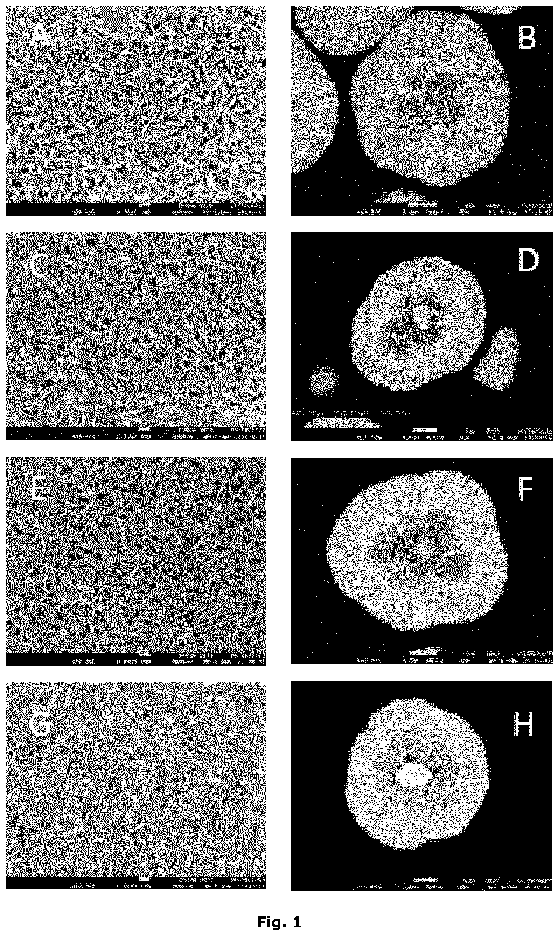

The physiochemical analysis of the obtained cathode active material precursor, including the measurements of surface area, tap density, total particle size distribution, metal content, Na and S impurity levels, and total pore volume, were conducted as described above and the results are given in Table 1. Fig. 1A shows the surface and Fig. 1B respectively shows the cross section structure of the obtained oxyhydroxide. From these figures the porous structure linked to the high BET value can be clearly observed.

(2) Cathode active material preparation step

The obtained cathode active material precursor powder and a lithium hydroxide powder were weighted in such a way that the ratio Li/Me between the number of moles of Li (mol) of lithium and the total number of moles of Me (mol) of the transition metals (Ni and Mn) was 1.35 and mixed by a container mixer for 30 min with the stirring speed of 1000 rpm. Then the mixture was slowly heated in a furnace to $T_{max}$=850 °C in a flow of oxygen gas of 20 L/min, and continuing the sintering for 8 hours. After cooling, the sample was sieved to obtain a powder of a cathode active material.

Further three cathode active material were similarly prepared except $T_{max}$ was varied in the following manner: $T_{max}$=875 °C, $T_{max}$=905 °C, and $T_{max}$=925 °C, respectively. The physiochemical properties of the obtained four cathode active materials are reported in Table 2.

(3) Battery manufacturing and evaluation step

A lithium secondary battery was manufactured using each of four prepared cathode active materials. The cathode was prepared as follows: the obtained cathode active material powder, conductor (Li-435, Denka) comprising dispersing agent (NBR), binder (KF#9700, Kureha) - with a formulation of 92.2:3.3:4.5 by weight - in a solvent (NMP, Mitsubishi) was prepared by a high-speed homogenizer so as to prepare a homogeneous cathode slurry. Then, the slurry was applied to an aluminum foil by using a doctor blade coater with a 180 μm gap, followed The slurry coated foil is dried in an oven at 120°C and then pressed using a calendaring tool. Then it is dried again in a vacuum oven to completely remove the remaining solvent in the electrode film to prepare a cathode.

The prepared cathode was then put in an argon-filled glove box and assembled within the coin cell case together a separator (Celgard 2320) located between the cathode and an anode of a lithium foil. Then, the coin cell is completely sealed to prevent leakage of the electrolyte. an anode of a lithium foil having a thickness of 500 μm and a separator of separation membrane (Tonen 20MMS polyethylene film). The coin cell was filled with a solution of LiPF6 dissolved in a mixed solvent of EC/EMC + LiBF$_4$ + FEC to manufacture a lithium secondary battery.

The manufactured secondary batteries were subjected to the testing followed the schedule shown in Table 2. Each cell was cycled using a Toscat-3100 computer-controlled galvanostatic cycling station (from Toyo). In the schedule a 1C current definition of 200 mA/g was used.

A discharge capacity of the third cycle, DQ3, and an efficiency (%), Ef are reported in Table 3. The Ef was obtained according to an equation below:

$$Ef(\%) = \frac{DQ1}{CQ1} \times 100(\%),$$

wherein CQ1 is the charge capacity at the first cycle and DQ1 is the discharge capacity at the first cycle.

Table 2. Cycling schedule for Coin cell testing method

| Cycle | Charge | | | | Discharge | | | | Measurement temperature (°C) |
|---|---|---|---|---|---|---|---|---|---|
| | C Rate | End current | Rest (min) | V/Li metal (V) | C Rate | End current | Rest (min) | V/Li metal (V) | |
| 1 | 0.10 | 0.05 | 10 | 4.65 | 0.1 | - | 10 | 2.0 | 45 |
| 2 | 0.10 | 0.05 | 10 | 4.4 | 0.10 | - | 10 | 2.5 | 25 |
| 3 | 0.33 | 0.05 | 10 | 4.4 | 0.33 | - | 10 | 2.5 | 25 |

**Example 2**

A cathode active material precursor, a cathode active material, and a lithium secondary battery were prepared and analyzed according to the same procedures as described in Example 1, except that in the particle growth process the starting solution pH was 10.0 which was then raised and kept between the maximum of 10.9 and the minimum of 10.7 during the precipitation reaction, and that in the cathode active material preparation step, two different kinds of cathode active materials were prepared by sintering the obtained cathode active material precursor powder and a lithium hydroxide powder at two different T$_{max}$, 850 °C and 925 °C, from which both of the two prepared cathode active material a battery was prepared and tested as described above.

The physiochemical properties of the obtained cathode active material precursor of this example are given in Table 1. Fig. 1C shows the surface and Fig. 1D respectively shows the cross section structure of the obtained cathode active material precursor. The physiochemical properties of the obtained two cathode active materials and the DQ and Ef of the manufactured two batteries are reported in Table 2.

**Example 3**

A cathode active material precursor, a cathode active material, and a lithium secondary battery were prepared and analyzed according to the same procedures as described in Example 1, except that in the particle growth process the starting solution pH was 9.8 which was then raised and kept between the maximum of 11.0 and the minimum of 10.7 during the precipitation reaction, and that in the cathode active material preparation step two different kinds of cathode active materials were prepared by sintering the obtained cathode active material precursor powder and a lithium hydroxide powder at two different $T_{max}$, 850 °C and 925 °C, from which both of the two prepared cathode active material a battery was prepared and tested as described above.

The physiochemical properties of the obtained cathode active material precursor of this example are given in Table 1. Fig. 1E shows the surface and Fig. 1F respectively shows the cross section structure of the obtained cathode active material precursor. The physiochemical properties of the obtained two cathode active materials and the DQ and Ef of the manufactured two batteries are reported in Table 2.

**Example 4**

A cathode active material precursor, a cathode active material, and a lithium secondary battery were prepared and tested according to the same procedures as described in Example 1, except that in the seed slurry preparation process the used metal sulfate solution comprised only nickel sulfate (i.e. $NiSO_4$) and the $NH_3$(aq) concentration in the reaction mixture was kept between 2.1 - 3.7 g/L and pH of the reaction mixture was kept between 12.4-12.7 by adjusting the feeding of the aqueous solution of ammonia and the feeding of NaOH solution, respectively, that in the particle growth process an amount of 350 mL of the prepared seed slurry of particles $Ni(OH)_2$ having D50 of 1.5 $\mu$m (a seed amount was 46 g) was admixed instead of the seeds used in Examples 1-3, the starting solution pH was 10.6 which was then raised and kept between the maximum of 10.9 and the minimum of 10.7 during the precipitation reaction and the reaction was terminated after 24 hours from the start, and that in the cathode active material preparation step two different kinds of cathode active materials were prepared by sintering the obtained cathode active material precursor powder and a lithium hydroxide powder at two different $T_{max}$, 850 °C and 925 °C, from which both of the two prepared cathode active material a battery was prepared and tested as described above.

The physiochemical properties of the obtained cathode active material precursor of this example are given in Table 1. Fig. 1G shows the surface and Fig. 1H respectively shows the cross section structure of the obtained cathode active material precursor. The physiochemical properties of the obtained two cathode active materials and the DQ and Ef of the manufactured two batteries are reported in Table 2.

**Comparative Example 1**

A cathode active material precursor, a cathode active material, and a lithium secondary battery were prepared and tested according to the same procedures as described in Example 1, except that in the particle growth process the gases of $N_2$ and $O_2$ were fed inside the reaction vessel in such a way that $O_2$ content in the reaction vessel atmosphere was maintained at 1.55 vol. %, the starting solution pH was 11.1 which was then kept between the maximum of 11.0 and the minimum of 10.9 during the precipitation reaction, the reaction mixture was stirred with the stirring speed of 1200 rpm for the first 2 hours, followed of 800 rpm for the next 2 hours and then of 600 rpm, respectively, for the rest of the precipitation process, and the reaction was terminated after 38 hours. Four different cathode active materials were prepared by varying the sintering temperature $T_{max}$, followed by preparing and testing the manufactured four different batteries in the same way as in Example 1.

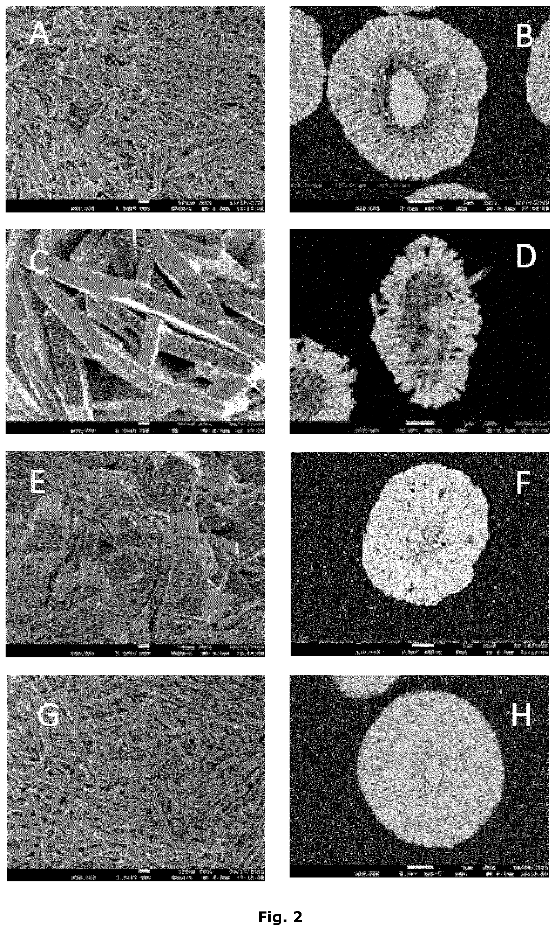

The physiochemical properties of the obtained cathode active material precursor of this example are given in Table 1. Fig. 2A shows the surface and Fig. 2B respectively shows the cross section structure of the obtained cathode active material precursor. The physiochemical properties of the obtained four cathode active materials and the DQ and Ef of the manufactured four batteries are reported in Table 2.

**Comparative Example 2**

A cathode active material precursor, a cathode active material, and a lithium secondary battery were prepared and tested according to the same procedures as described in Example 1, except that in the particle growth process 3.25 L of DI water and 250 mL of the prepared seed slurry of particles $Ni_{0.35}Mn_{0.65}(OH)_2$ having D50 of 1.3 $\mu$m (a seed amount was 30 g) was added in the reaction vessel equipped with a turbine impeller which located 46 mm from the bottom. $N_2$ gas was fed inside the reaction vessel without any $O_2$ gas to maintain an inert reaction vessel atmosphere, the starting solution pH was 10.4 which was then kept between the maximum of 11.1 and the minimum of 10.9 during the precipitation reaction, the reaction mixture was stirred with the stirring speed of 850 rpm for the first 2 hours, followed of 700 rpm for the next 2 hours and then of 600 rpm, respectively, for the rest of the precipitation process, and the reaction was terminated after 22 hours. Four different cathode active materials were prepared by varying the sintering temperature $T_{max}$ in the same way as in Example 1.

The physiochemical properties of the obtained cathode active material precursor of this example are given in Table 1. Fig. 2C shows the surface and 2D respectively shows the cross section structure of the obtained cathode active material precursor. The physiochemical properties of the obtained four cathode active materials and the DQ and Ef of the manufactured four batteries are reported in Table 2.

**Comparative Example 3**

A cathode active material precursor, a cathode active material, and a lithium secondary battery were prepared and tested according to the same procedures as described in Example 1, except that in the particle growth process 2.7 L of DI water and 800 mL of the prepared seed slurry of particles $Ni_{0.35}Mn_{0.65}(OH)_2$ having D50 of 1.5 $\mu$m (a seed amount was 96 g) was added in the reaction vessel equipped with a turbine impeller which located 65 mm from the bottom, the gas of $N_2$ gas was fed inside the reaction vessel without any $O_2$ gas to maintain an inert reaction vessel atmosphere, the feed rate of the metal sulfate solution was 1200 mL/h, the starting solution pH was 11.0 which was then kept between the maximum of 11.1 and the minimum of 10.6 during the precipitation reaction, and the reaction mixture was stirred with the stirring speed of 1000 rpm for the first 2 hours, followed of 800 rpm for the rest of the precipitation process. The reaction was terminated after 46 hours. Four different cathode active materials were prepared by varying the sintering temperature $T_{max}$ in the same way as in Example 1.

The physiochemical properties of the obtained cathode active material precursor of this example are given in Table 1. Fig. 2E shows the surface and 2F respectively shows the cross section structure of the obtained cathode active material precursor. The physiochemical properties of the obtained four cathode active materials and the DQ and Ef of the manufactured four batteries are reported in Table 2.

**Comparative Example 4**

A cathode active material precursor, a cathode active material, and a lithium secondary battery were prepared and tested according to the same procedures as described in Example 1, except that in the particle growth process a 200 L reaction vessel equipped with turbine-type impeller located 80 mm from the bottom of the vessel was used, the starting solution was prepared by adding 100 L water and 15 L of the prepared seed slurry of particles Ni $(OH)_2$ having D50 of 1.5 $\mu$m of example 4 (a seed amount was 1.8 kg) and adjusting the pH to a value of 10.4, during the precipitation reaction the metal sulfate solution was fed at a constant rate of 25 L/h, the pH value of the reaction mixture in the reaction vessel was raised from the pH value of the starting solution and kept between the maximum of 10.9 and the minimum of 10.7 (measured at a temperature of 20 °C), the gases of $N_2$ and $O_2$ were fed inside the reaction vessel in such a way that $O_2$ content in the reaction vessel atmosphere was maintained at 4.2 vol. %, the reaction mixture was stirred with the stirring speed of 550 rpm for the first 2 hours, followed of 400 rpm for the next 2 hours, followed of 300 rpm for the next 18 hours and then of 200 rpm, respectively, for the rest of the precipitation process, and the reaction was terminated after 38 hours. In the cathode active material preparation step two different kinds of cathode active materials were prepared by sintering the obtained cathode active material precursor powder and a lithium hydroxide powder at two different $T_{max}$, 850 °C and 925 °C, from which both of the two prepared cathode active material a battery was prepared and tested as described in the same way as in Example 1.

The physiochemical properties of the obtained cathode active material precursor of this example are given in Table 1. Fig. 2G shows the surface and 2H respectively shows the cross section structure of the obtained cathode active material precursor. The physiochemical properties of the obtained four cathode active materials and the DQ and Ef of the manufactured four batteries are reported in Table 2.

**Discussion of the results**

Referring to Tables 1 and 2, the lithium secondary batteries of the examples had improved discharge capacity (DQ3) and capacity efficiency (Ef) as a whole compared to the lithium secondary batteries of the comparative examples.

In Comparative example 1, since the TD value of the precursor was lower compared to the Examples 1-4, potentially in addition its higher TPV value, respectively, the DQ3 and Ef of the battery were remarkably reduced.

In Comparative examples 2 and 3, since their precursors had low SSA values, and thus low SSA/TD values, the DQ3 and Ef of their batteries were remarkably reduced.

In Comparative example 4, since the TD value of the precursor was higher compared to the respective value in Examples 1-4, potentially even if its relative high TPV value, the DQ3 and Ef of the battery were remarkably reduced.

Referring to the sintering temperatures used, in Examples 1-4 the best battery performance in DQ3 and Ef was obtained with the lowest tested sintering temperature, 850 °C, contrast to the Comparative examples 1-4.

TABLE 1

| Section | Composition [mol%] | | D50 [μm] | Span | Primary particle thickness distribution (nm) | | Na [ppm] | S [ppm] | TD [g/cm³] | SSA [m²/g] | SSA/TD [(m²*cc)/g²] | TPV by BJH [cm³/g] |
|---|---|---|---|---|---|---|---|---|---|---|---|---|
| | Ni(x) | Mn(y) | | | p50 | p75 | | | | | | |
| Example 1 | 35.0 | 65.0 | 6.2 | 0.39 | 23.26 | 29.33 | 59 | 1502 | 1.71 | 35.98 | 21.04 | 0.157 |
| Example 2 | 35.8 | 64.2 | 5.6 | 0.37 | 32.98 | 49.30 | 72 | 1502 | 1.78 | 30.41 | 17.08 | 0.132 |
| Example 3 | 37.0 | 63.0 | 6.5 | 0.40 | 30.59 | 38.17 | 66 | 1535 | 1.70 | 34.66 | 20.39 | 0.142 |
| Example 4 | 37.2 | 62.8 | 7.0 | 0.36 | 29.58 | 32.81 | 65 | 2703 | 1.80 | 26.74 | 14.86 | 0.103 |
| Comparative Example 1 | 40.4 | 59.6 | 5.9 | 0.39 | 39.78 | 94.19 | 48 | 2436 | 1.49 | 32.89 | 22.07 | 0.183 |
| Comparative Example 2 | 34.7 | 65.3 | 5.6 | 0.56 | 164.19 | 193.27 | 109 | 1469 | 1,66 | 15.11 | 9.10 | 0.063 |
| Comparative Example 3 | 35.4 | 64.6 | 6.9 | 0.36 | 247.33 | 279.14 | 60 | 1068 | 2.11 | 11.82 | 5.60 | 0.041 |
| Comparative Example 4 | 35.4 | 64.6 | 6.7 | 0.30 | 36.65 | 72.75 | 94 | 1235 | 1.98 | 21.49 | 10.85 | 0.073 |

TABLE 2

| Section | Cathode active material physiochemical properties | | | | | | | Battery electrochemical properties | |
|---|---|---|---|---|---|---|---|---|---|
| | Sintering temperature [°C] | D50 [μm] | Span | SSA [m²/g] | TPV by BJH [cm³/g] | Na [ppm] | S [ppm] | Discharge charge capacity of 3rd cycle, DQ3, [mAh/g] | Initial capacity efficiency, Ef (%) |
| Example 1 | 850 | 5.84 | 0.38 | 3.31 | 0.0153 | 37 | 1593 | 210.2 | 92.6 |
| | 875 | 5.83 | 0.38 | 3.04 | 0.0126 | 50 | 1588 | 208.3 | 90.3 |
| | 905 | 5.84 | 0.38 | 2.65 | 0.0089 | 37 | 1546 | 203.0 | 91.2 |
| | 925 | 5.82 | 0.38 | 2.26 | 0.0065 | 40 | 1525 | 202.5 | 90.9 |
| Example 2 | 850 | 5.41 | 0.38 | 1.67 | 0.0075 | 50 | 1283 | 207.7 | 91.7 |
| | 925 | 5.39 | 0.40 | 1.27 | 0.0040 | 58 | 1300 | 201.0 | 87.3 |
| Example 3 | 850 | 6.21 | 0.35 | 1.99 | 0.0087 | 58.49 | 1263 | 208.6 | 91.5 |
| | 925 | 6.25 | 0.37 | 1.68 | 0.0093 | 42 | 1290 | 202.3 | 89.9 |
| Example 4 | 850 | 6.79 | 0.37 | 0.63 | 0.0017 | 62 | 2184 | 212.8 | 93.1 |
| | 925 | 6.80 | 0.38 | 0.63 | 0.0015 | 69 | 2184 | 198.3 | 89.9 |
| Comparative example 1 | 850 | 5.68 | 0.37 | 3.91 | 0.0110 | 39 | 2249 | 196.8 | 84.4 |
| | 875 | 5.69 | 0.36 | 3.32 | 0.0081 | 38 | 2236 | 196.9 | 89.2 |
| | 905 | 5.68 | 0.36 | 2.64 | 0.0053 | 41 | 2281 | 194.9 | 88.1 |
| | 925 | 5.65 | 0.36 | 2.23 | 0.0040 | 45 | 2240 | 193.8 | 86.8 |
| Comparative example 2 | 850 | 5.51 | 0.59 | 0.88 | 0.0014 | 118 | 1061 | 182.9 | 85.8 |
| | 875 | 5.49 | 0.58 | 0.97 | 0.0016 | 116 | 1070 | 186.3 | 83.9 |
| | 905 | 5.48 | 0.58 | 1.02 | 0.0018 | 114 | 1062 | 188.8 | 87.7 |
| | 925 | 5.48 | 0.58 | 1.03 | 0.0018 | 115 | 1054 | 191.1 | 87.6 |
| Comparative example 3 | 850 | 6.88 | 0.31 | 0.54 | 0.0014 | 41 | 949 | 175.9 | 85.9 |
| | 875 | 6.87 | 0.33 | 0.54 | 0.0012 | 58 | 981 | 180.4 | 85.4 |
| | 905 | 6.87 | 0.32 | 0.50 | 0.0009 | 43 | 975 | 183.2 | 85.9 |
| | 925 | 6.88 | 0.31 | 0.46 | 0.0008 | 43 | 950 | 184.9 | 87.2 |
| Comparative example 4 | 850 | 6.71 | 0.43 | 0.32 | 0.0005 | 79 | 776 | 176.6 | 89.1 |
| | 875 | 6.59 | 0.42 | 0.32 | 0.0006 | 68 | 801 | 185.7 | 88.9 |

**Claims**

1. A manganese-containing precursor for cathode active material for secondary batteries, said precursor comprising M and element oxygen, wherein M compress

   - Ni in a content x, wherein $0.0 \leq x \leq 50.0$ mol%, relative to M,
   - Mn in a content y, wherein $50.0 \leq y \leq 90.0$ mol%, relative to M,
   - Co in a content z, wherein $0.0 \leq z \leq 40.0$ mol%, relative to M,
   - at least one element selected from the group consisting of Al, Ti, V, Mg, Cr, Ca, Zr, Nb, Mo, Hf, Ta, and W, in a content t, $0.0 \leq t \leq 10.0$ mol%, relative to M;
   - wherein x, y, z, and t are measured by ICP-OES; and
   - wherein x+y+z+t is 100.0 mol%; and

wherein
the manganese-containing precursor has a tap density, TD, of at least 1.65 $g/cm^3$ and a ratio of a specific surface area, SSA, to the tap density, SSA/TD, of at least 12.00, expressed in unit $(m^{2*}\ cm^3)/g^2$.

2. The manganese-containing precursor according to claim 1, wherein the precursor is represented by a general formula $M\text{-}O_a(OH)_{2-a}$, wherein $0 \leq a \leq 2$.

3. The manganese-containing precursor according to claim 1 or 2, wherein the ratio SSA/TD is at least 14.00.

4. The manganese-containing precursor according to any of previous claims, wherein the ratio SSA/TD is at most 30.00, preferably at most 25.00.

5. The manganese-containing precursor according to any of previous claims, having a total pore volume, TPV, of at least 0.100 $cm^3/g$ determined from nitrogen adsorption measurement and calculated according to the BJH; preferably TPV is at most 0.200 $cm^3/g$, more preferably at most 0.180 $cm^3/g$.

6. The manganese-containing precursor according to any of previous claims, wherein the Ni content x is at most 45 mol%, and preferably at least 10 mol%, more preferably at least 15 mol%.

7. The manganese-containing precursor according to any of previous claims, wherein the tap density is at least 1.70 $g/cm^3$.

8. The manganese-containing precursor according to any of previous claims, wherein the tap density is at most 2.00 $g/cm^3$, preferably the tap density at most 1.90 $g/cm^3$, most preferably at most 1.80 $g/cm^3$.

9. The manganese-containing precursor according to any of previous claims, wherein the specific surface area is at least 25.00 $m^2/g$, preferably at least 30.00 $m^2/g$, more preferably at least 33.00 $m^2/g$.

10. The manganese-containing precursor according to any of previous claims, having a median particle size, D50, of at least 5.00 $\mu m$, as determined by laser diffraction; preferably the D50 is at most 12.00 $\mu m$, more preferably at most 10.00 $\mu m$.

11. The manganese-containing precursor according to any of previous claims, wherein

   - the Mn content y is at least 55 mol% or at least 60 mol%, and/or
   - the Mn content y is at most 80 mol% or at most 70 mol%.

12. The manganese-containing precursor according to any of previous claims, having a Na content of at most 100 ppm.

13. The manganese-containing precursor according to any of previous claims, having an S content of at most 5000 ppm, preferably wherein the S content being at least 1400 ppm.

14. The manganese-containing precursor according to any of previous claims, comprising secondary particles composed of aggregated primary particles, wherein said primary particles have a particle-based thickness distribution as determined by measuring primary particle thickness in an image taken by SEM, wherein

   said thickness distribution has a corresponding thickness when a cumulative percentage reaches 75% being between 10 nm and 70 nm, preferably being between 20 nm and 50 nm; and/or
   said thickness distribution has a corresponding thickness when a cumulative percentage reaches 50% being between 10 nm and 70 nm, preferably being between 20 nm and 40 nm.

15. A cathode active material for a lithium-ion secondary battery, comprising lithium-transition metal composite oxide particles formed by using the manganese-containing precursor according to any of the claims 1 to 14.

16. A lithium-ion secondary battery comprising:
a cathode which comprises a cathode active material layer comprising a cathode active material of claim 15.

Fig. 1

Fig. 2

Europäisches
Patentamt

European
Patent Office

Office européen
des brevets

# EUROPEAN SEARCH REPORT

**Application Number**

EP 23 21 4491

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 102 081 A (SVOLT ENERGY TECH CO LTD) 12 May 2023 (2023-05-12) * claims 1,6,9; example 3; table 2 * | 1-16 | INV. C01G45/12 C01G53/00 H01M4/505 H01M4/525 |
| A | CN 114 853 091 A (JIANGXI HANYAOFU LITHIUM TECH CO LTD) 5 August 2022 (2022-08-05) * claim 1; example 1; table 1 * | 1-16 | |
| A | CN 114 804 228 A (NANTONG KINGTON ENERGY STORAGE POWER NEW MAT CO LTD) 29 July 2022 (2022-07-29) * claims 1,2; example 1 * | 1-16 | |

**TECHNICAL FIELDS SEARCHED (IPC)**

C01G
H01M

The present search report has been drawn up for all claims

| Place of search | Date of completion of the search | Examiner |
|---|---|---|
| Munich | 22 May 2024 | Redecker, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 21 4491

This annex lists the patent family members relating to the patent documents cited in  the above-mentioned European search report.
The members are as contained in the European Patent Office EDP file on
The European Patent Office is in no way liable for these particulars which are merely given for the purpose of information.

22-05-2024

| Patent document cited in search report | Publication date | Patent family member(s) | Publication date |
|---|---|---|---|
| CN 116102081 A | 12-05-2023 | NONE | |
| CN 114853091 A | 05-08-2022 | NONE | |
| CN 114804228 A | 29-07-2022 | NONE | |

EPO FORM P0459

For more details about this annex : see Official Journal of the European Patent Office, No. 12/82